# EUROPÄISCHE PATENTSCHRIFT

(11) **EP 0 619 329 B1**
(45) Veröffentlichungstag und Bekanntmachung des Hinweises auf die Patenterteilung: **28.01.1998**
(21) Anmeldenummer: 94104863.9
(22) Anmeldetag: 28.03.1994
(51) Int. Cl.: C08F 220/28, C08F 220/32, C09D 133/14

(54) **Wässrige Dispersionen von Acrylatcopolymerisaten**
Aqueous dispersions of acryl co-polymers
Dispersions aqueuses de copolymères d'acrylates

(30) Priorität: 05.04.1993 DE 4311128
(43) Veröffentlichungstag der Anmeldung: 12.10.1994
(73) Patentinhaber: HOECHST AKTIENGESELLSCHAFT, 65926 Frankfurt am Main (DE)
(72) Erfinder: Schmidt, Holger, Dr., D-65195 Wiesbaden (DE); Brück, Tanja Regina, D-55252 Mainz-Kastel (DE); Kubillus, Uwe, Dr., D-65195 Wiesbaden (DE); Oswald, Harald, D-65719 Hofheim (DE); Schaub, Petra, D-65195 Wiesbaden (DE); Travers-Hemmer, Andrea, D-65375 Oestrich-Winkel (DE)

(56) Entgegenhaltungen:
- EP-A- 0 270 428
- DE-A- 2 942 327

## Beschreibung

Die Erfindung betrifft wäßrige Dispersionen von Acrylatcopolymerisaten sowie Verfahren zu deren Herstellung und deren Verwendung in wäßrigen Einbrenn-Klarlacken und wäßrigen Einbrenn-Unidecklacken.

Aus DE-A 29 42 327 und EP-A 0 056 971 sind bereits Acrylatcopolymerisate bekannt, die als Bindemittel in konventionellen lösemittelhaltigen Lacken eingesetzt werden.

Für das base-coat/clear-coat-Verfahren in der Autodecklackierung ist es aber aus ökologischen Gründen wünschenswert, einen wäßrigen Klarlack mit einem möglichst geringen Gehalt an organischen Hilfslösemitteln zu verwenden. Des weiteren wird auch eine Substitution von konventionellen, lösemittelhaltigen Unidecklacken durch wäßrige Lacksysteme angestrebt. Die wäßrigen Klar- und Decklacke müssen bei Spritzviskosität einen so hohen Feststoffgehalt haben, daß mit ein bis zwei Spritzgängen Lackfilme mit ausreichender Schichtstärke erhalten werden, die nach dem Einbrennen kocherfreie Lackfilme mit gutem Aussehen und hohen Beständigkeiten, insbesondere gegen Schwefelsäure, Xylol und Aceton, ergeben.

Polyacrylatharze, die in wäßrigen Decklacken eingesetzt werden können, sind in DE-A 40 09 931 beschrieben. Als Monomere zum Aufbau dieser Copolymeren kommen Alkylacrylate, Hydroxyalkylacrylate, Acrylsäure und Styrol in Frage, nicht jedoch die Glycidylester von aliphatischen gesättigten Monocarbonsäuren. Wäßrige Lackbindemittel auf der Basis von Acrylatcopolymerisaten sind auch aus EP 496 079 bekannt. Die Polymerisate enthalten zwingend fluorhaltige Monomere.

Gegenstand der Erfindung sind wäßrige Dispersionen von Acrylatcopolymerisaten mit einer Hydroxylzahl von 80 bis 160 mg KOH/g und einer Säurezahl von 15 bis 50 mg KOH/g, erhalten durch radikalische Copolymerisation von
a) 10 bis 30 Gew.-Teilen mindestens eines Glycidylesters einer in α-Stellung verzweigten aliphatischen gesättigten Monocarbonsäure,
b) 0 bis 30 Gew.-Teilen mindestens eines Diesters einer α-olefinisch ungesättigten Dicarbonsäure mit 1 bis 8 C-Atomen in der Estergruppe,
c) 0 bis 45 Gew.-Teilen mindestens eines vinylaromatischen Kohlenwasserstoffs, wobei die molare Menge der Komponente c) immer größer oder gleich der molaren Menge der Komponente b) ist.
d) 10 bis 60 Gew.-Teilen Vorzugsweise 10-40 Gew.-Teilen mindestens eines Alkylesters einer α-olefinisch ungesättigten Carbonsäure, vorzugsweise (Meth)acrylsäurealkyl- oder cycloalkylester, welche einen Alkyl- oder Cycloalkylrest mit 1 bis 18 C-Atomen aufweisen,
e) 2 bis 40 Gew.-Teilen mindestens einer α-olefinisch ungesättigten Carbonsäure, vorzugsweise (Meth)acrylsäure, wobei die molare Menge der Komponente e) stets größer ist als die molare Menge der Komponente a),
f) 5 bis 40 Gew.-Teilen mindestens eines Hydroxyalkylesters einer α-olefinisch ungesättigten Carbonsäure, vorzugsweise eines Esters der (Meth)acrylsäure mit mehrwertigen aliphatischen Alkoholen mit 2 bis 6 C-Atomen,
wobei die Copolymerisation in Substanz oder in Gegenwart eines wasserverdünnbaren Lösemittels durchgeführt wird, gegebenenfalls anschließend weiteres wasserverdünnbares Lösemittel zugefügt wird, und zuletzt die Neutralisation mit Basen derartig erfolgt, daß nach dem Verdünnen mit Wasser stabile Dispersionen mit einem pH-Wert zwischen 6 und 10 resultieren.

Zur Herstellung der Acrylatcopolymerisate können als Komponente a) Glycidylester einer aliphatischen gesättigten Monocarbonsäure mit einem tertiären oder quarternären C-Atom in α-Stellung verwendet werden. Besonders bevorzugt sind Glycidylester stark verzweigter Monocarbonsäuren mit einer Kettenlänge von 9 bis 11 C-Atomen, wie sie zum Beispiel unter dem Handelsnamen CARDURA® erhältlich sind. Die Komponente a) bildet im Verlauf der Herstellung der Acrylatcopolymerisate mit der Komponente e) ein Umsetzungsprodukt, das sich radikalisch mit mindestens einer der Komponenten b), c), d) oder f) copolymerisieren läßt.

Die Komponente b) besteht aus Diestern einer α,β-olefinisch ungesättigten Dicarbonsäure mit 1 bis 8 C-Atomen in der Estergruppe, bevorzugt Maleinsäure- und Fumarsäureester wie Dimethylmaleinat, Diethylfumarat, Dibutylmaleinat und Dibutylfumarat.

Als Komponente c) lassen sich Verbindungen wie Styrol, α-Methylstyrol und (Alkylphenyl)ethene mit Alkylresten von 1 bis 3 C-Atomen, zum Beispiel Vinyltoluol, einsetzen.

Die Komponente d) umfaßt Alkylester einer α,β-olefinisch ungesättigten Carbonsäure, vorzugsweise (Meth)acrylsäurealkyl- oder cycloalkylester, welche einen Alkyl- oder Cycloalkylrest mit 1 bis 18 C-Atomen aufweisen, beispielsweise Methyl(meth)acrylat, Ethyl(meth)acrylat, Propyl(meth)acrylat, Butyl(meth)acrylat, Hexyl(meth)acrylat, Ethylhexyl (meth)acrylat, Lauryl (meth)acrylat, Stearyl(meth)acrylat, Cyclohexyl(meth)acrylat, tert-Butylcyclohexyl(meth)acrylat, Trimethylcyclohexyl(meth)acrylat, Isobornyl(meth)acrylat und Dihydrodicydopentadienyl(meth)acrylat. Der in der Literatur bereits beschriebene viskositätssenkende Effekt von raumerfüllenden, starren Monomeren wie Isobornyl(meth)acrylat zeigt sich auch bei den erfindungsgemäßen Copolymerisaten.

Geeignete Komponenten e) sind α,β-olefinisch ungesättigte Carbonsäuren wie (Meth)acrylsäure, Crotonsäure und Halbester olefinisch ungesättigter Dicarbonsäuren, deren Alkoholkomponente im allgemeinen 1 bis 18 C-Atome hat, und ungesättigte Fettsäuren mit 8 bis 22 C-Atomen wie zum Beispiel Linolensäure, Linolsäure, Ölsäure, Arachidonsäure und Ricinenfettsäure.

Als Komponente f) werden Hydroxyalkylester einer α,β-olefinisch ungesättigten Carbonsäure wie Ester der (Meth)acrylsäure mit mehrwertigen aliphatischen Alkoholen mit 2 bis 6 C-Atomen eingesetzt. Als Beispiele seien genannt 2-Hydroxyethyl(meth)acrylat, 2-Hydroxypropyl(meth)acrylat, 3-Hydroxy-2-Hydroxybutyl(meth)acrylat, 2-Hydroxybutyl(meth)acrylat, 4-Hydroxybutyl(meth)acrylat, Hexandiolmono(meth)acrylat und Trimethylolpropandi(meth)acrylat.

Die Herstellung der erfindungsgemäßen Acrylatcopolymerisat-Dispersionen erfolgt nach dem Verfahren der Substanzpolymerisation. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem geringen Lösemittelanteil von bis zu 5, vorzugsweise bis zu 3 Gew.-Teilen möglich. Die Polymerisation wird im allgemeinen so durchgeführt, daß man mindestens einen Teil der Komponente a) allein oder zusammen mit mindestens einem Teil der Komponente b) vorgelegt und bei 120 bis 200 °C ein Gemisch der Komponenten c) bis f) und etwaigen restlichen Komponenten a) oder b) zusammen mit einem Polymerisationsinitiator und gegebenenfalls mit einem Regler zugibt und in einer Substanzpolymerisation so lange umsetzt, bis ein Umsetzungsgrad von mindestens 95, vorzugsweise mindestens 98 % erreicht ist. Zur Herstellung einer wäßrigen Dispersion wird das so erhaltene Acrylatcopolymerisat zunächst mit 5 bis 35, vorzugsweise 10 bis 25 Gew.-teilen eines wasserverdünnbaren organischen Hilfslösemittels angelöst und dann durch Zugabe der entsprechenden Menge einer Base partiell oder vollständig neutralisiert. Das organische Hilfslösemittel kann auch ganz oder teilweise zusammen mit den Komponenten c) bis f) zugegeben werden. Anschließend wird das ganz oder teilweise neutralisierte Acrylatcopolymer durch normale oder inverse Verdünnung mit Wasser in eine wäßrige Dispersion überführt. Die einzelnen Monomeren a) bis f) werden jeweils in solchen molaren Mengen eingesetzt, daß das fertige Acrylatcopolymerisat die eingangs definierten Hydroxylzahlen und Säurezahlen aufweist.

Als Polymerisationsinitiatoren kommen alle üblichen Starter für radikalische Copolymerisationen in Betracht wie aliphatische Azoverbindungen, zum Beispiel Azobis[isobutyronitril] oder Azobis[2-methylbutyronitril], Diacylperoxide, zum Beispiel Dibenzoylperoxid, Dialkylperoxide, zum Beispiel Di-tert-butylperoxid oder Di-tert-amylperoxid, Alkylhydroperoxide, zum Beispiel tert-Butylhydroperoxid, oder Perester, zum Beispiel tert-Butylperoxybenzoat, tert-Butylperoxy-2-ethylhexanoat oder tert-Amylperoxy-2-ethylhexanoat. Bevorzugt ist Di-tert-butylperoxid in einer Menge von 0,5 bis 5 Gew.-Teilen, bezogen auf die Gesamtmenge der Komponenten a) bis f).

Sofern zur Erzielung besonders niedriger mittlerer Molekülmassen der Einsatz von Reglern notwendig ist, werden Alkohole, zum Beispiel Butanol, oder Mercaptane, zum Beispiel Dodecylmercaptan, verwendet.

Geeignete organische Hilfslösemittel sind unter anderem wasserverdünnbare ein- oder mehrwertige Alkohole oder Glykole, zum Beispiel Ethanol, n-Propanol, Isopropanol, n-Butanol, Isobutanol, Ethylenglykol, Diethylenglykol, Triethylenglykol, Propylenglykol und Glycerin, wasserverdünnbare Monoether von mehrwertigen Alkoholen, zum Beispiel Methoxypropanol oder Methoxybutanol, sowie wasserverdünnbare Glykolether wie zum Beispiel Butylglykol oder Butyldiglykol.

Zur Neutralisation der Säuregruppen können sowohl organische Basen als auch anorganische Basen verwendet werden. Vorzugsweise werden primäre, sekundäre und tertiäre Amine, zum Beispiel Ethylamin, Propylamin, Dimethylamin, Triethylamin, Dibutylamin, Dimethylisopropylamin, Cyclohexylamin, Benzylamin, Morpholin und Piperidin eingesetzt, besonders bevorzugt sind Aminoalkohole, zum Beispiel N,N-Diethylaminoethanol, N,N-Dimethylaminoethanol, Ethanolamin, Diethanolamin, Triethanolamin, 2-Amino-2-methylpropanol oder 2-Dimethylamino-2-methyl-1-propanol. Die Neutralisation wird so durchgeführt, daß nach dem Verdünnen mit Wasser stabile Lösungen oder Dispersionen mit einem pH-Wert zwischen 6 und 10, vorzugsweise 7 bis 8,5, resultieren.

Der Feststoffgehalt der wäßrigen Dispersionen wird so eingestellt, daß die Dispersionen nicht zu viskos werden und praktisch handhabbar bleiben. Im allgemeinen stellt man auf Feststoffgehalte von 30 bis 50 Gew.-% ein.

Aus den so erhaltenen wäßrigen Dispersionen von Polyacrylatharzen werden wäßrige Einbrenn-Klarlacke oder wäßrige Einbrenn-Unidecklacke nach allgemein bekannten Methoden durch Zumischung eines Aminoplastharzes als Vernetzungsmittel und gegebenenfalls üblichen Lackzusatzstoffen wie Katalysatoren, Verlaufs- bzw. Verdickungsmitteln, Rheologiehilfsmitteln, Pigmenten, Pigmentpasten, Entschäumern, Netzmitteln, Füllstoffen, Lichtschutzmitteln, Antioxidantien und dergleichen hergestellt.

Die wäßrigen Einbrenn-Klarlacke oder wäßrigen Einbrenn-Unidecklacke enthalten vorzugsweise soviel Aminoplastharz, daß das Gewichtsverhältnis zwischen Polyacrylatharz und Aminoplastharz 60 : 40 bis 90 10, besonders bevorzugt 70 : 30 bis 85 : 15, beträgt.

Prinzipiell können alle Aminoplastharze, die sich mit den Polyacrylatharzen zu einem stabilen wäßrigen Einbrenn-Klarlack oder wäßrigem Einbrenn-Unidecklack verarbeiten lassen, als Vernetzungsmittel eingesetzt werden. Vorzugsweise werden Melamin-Formaldehydharze, die mit aliphatischen Alkoholen, die vorzugsweise 1 bis 4 C-Atome pro Molekül enthalten, teilweise oder vollständig verethert sind, als Vernetzungsmittel eingesetzt, zum Beispiel MAPRENAL® MF 900 (Cassella), CYMEL® 303 (American Cyanamid), MAPRENAL® VMF 3921 w (Cassella) und MAPRENAL® VMF 3926 (Cassella).

Vor der Applikation werden die mit den erfindungsgemäßen wäßrigen Dispersionen von Acrylatcopolymerisaten formulierten wäßrigen Einbrenn-Klarlacke oder wäßrigen Einbrenn-Unidecklacke auf Spritzviskosität - im allgemeinen 20 bis 40 s Auslaufzeit aus dem DIN-Becher 4 (DIN 53 211) - und einen pH-Wert von 7 bis 9 eingestellt.

Die mit den erfindungsgemäßen Dispersionen formulierten wäßrigen Einbrenn-Klarlacke oder wäßrigen Einbrenn-Unidecklacke weisen bei Spritzviskosität einen so hohen Feststoffgehalt bei einem verhältnismäßig niedrigen Anteil an organischen Hilfslösemitteln auf, daß mit ein bis zwei Spritzgängen Lackfilme mit ausreichender Schichtstärke (die Dicke des eingebrannten Lackfilms sollte vorzugsweise zwischen 30 und 45 µm liegen) erhalten werden, die nach dem Einbrennen kocherfreie, nicht vergilbende Lackfilme mit gutem Aussehen und hohen Beständigkeiten, insbesondere gegen Schwefelsäure, Xylol und Aceton, ergeben.

Die mit den erfindungsgemäßen Dispersionen formulierten wäßrigen Einbrenn-Klarlacke eignen sich insbesondere zur Herstellung von Metalleffektlackierungen nach dem base-coat/clear-coat-Verfahren.

Ein Vorteil der Acrylatcopolymerisate liegt darin, daß bei der Herstellung keinerlei Lösemittel abdestilliert werden müssen und sich wäßrige Bindemittel mit niedrigen mittleren Molekülmassen ohne den Zusatz von Reglern herstellen lassen. Daraus resultieren Bindemittel mit einem hohen Festkörpergehalt und einem niedrigen Anteil an organischen Hilfslösemitteln.

Ein Vorteil der Dispersionen gegenüber bekannten wäßrigen Bindemitteln ist die außerordentlich hohe Beständigkeit der damit formulierten wäßrigen Einbrenn-Klarlacke oder wäßrigen Einbrenn-Unidecklacke gegenüber anorganischen Säuren, insbesondere Schwefelsäure. Die als Test für die Resistenz gegen Umwelteinflüsse wie "saurer Regen" herangezogene Schwefelsäurebeständigkeit der wäßrigen Lacke ist bei Verwendung der erfindungsgemäßen Bindemittel in vielen Fällen sogar besser als die von konventionellen Lacken. In Kombination mit hochreaktiven, teilveretherten Melamin-Formaldehydharzen werden extrem gute Beständigkeiten gegenüber organischen Agenzien wie Xylol und Aceton gefunden, die weit über denen konventioneller Lacksysteme liegen. Als weiterer Vorteil der erfindungsgemäßen Bindemittel ist die hohe Vergilbungsstabilität bei der Verwendung in Einkomponenten-Einbrennlacken in Kombination mit Aminoplastharzen anzusehen.

Darüberhinaus ist anzumerken, daß die mit den Dispersionen gemäß dieser Erfindung hergestellten Einbrennlacke ohne den in DE-A 40 27 594 beschriebenen Zusatz von fluorierten Verbindungen und ohne freie oder verkappte Polyisocyanate eine gute Wasserbeständigkeit aufweisen. Hierin liegt ein ökologischer Vorteil.

In den folgenden Beispielen wird die Erfindung näher erläutert. Alle Angaben zu Teilen oder Prozenten sind Gewichtsangaben, wenn nicht ausdrücklich etwas anderes angegeben wird.

### Beispiele 1a - 1f:

Die Ester I werden in einer Rückflußapparatur vorgelegt und auf 180 °C aufgeheizt. Die Monomerenmischung II mit dem darin gelösten Starter III (siehe Tabelle 1) wird nun innerhalb von 8 Std. gleichmäßig unter Stickstoff zudosiert. Anschließend läßt man 2 Std. bei gleicher Temperatur nachreagieren. Der Ansatz wird nun auf etwa 130 °C abgekühlt und dann mit der Zugabe des Lösemittels IV begonnen. Nach Beendigung der Zugabe kühlt man auf 80 °C ab und fügt unter Rühren das Neutralisationsamin V innerhalb von 1 Std. und anschließend das entsalzte Wasser VI innerhalb von 2 Std. zu. Unter Rühren wird nun auf 25 °C abgekühlt und filtriert.

### Beispiel 1g:

24.9 Gewichtsteile Versaticsäureglycidylester werden in einer Rückflußapparatur vorgelegt und auf 160 °C erwärmt. Innerhalb von 8 Std. wird eine Mischung von 10,3 Teilen n-Butylmethacrylat, 14,2 Teilen 2-Hydroxyethylmethacrylat, 18,3 Teilen Isobornylacrylat, 15,6 Teilen Methacrylsäure, 16,7 Teilen Methylmethacrylat, 2 Teilen tert-Butylperoxy-2-ethylhexanoat und 15 Teilen 1-Butanol gleichmäßig unter Stickstoff zudosiert. Die Reaktionstemperatur fällt dabei kontinuierlich bis auf einen Endwert von 130 bis 135 °C. Anschließend läßt man 2 Std. bei dieser Temperatur nachreagieren. Man kühlt auf 80 °C ab und fügt unter Rühren 7,1 Teile Triethanolamin innerhalb von 1 Std. und anschließend 125,9 Teile entsalztes Wasser innerhalb von 2 Std. zu. Unter Rühren wird auf 25 °C abgekühlt und filtriert.

**Tabelle 1:**

| **Bezeichnung** | | **1a** | **1b** | **1c** | **1d** | **1e** | **1f** |
|---|---|---|---|---|---|---|---|
| | | **Gewichtsteile** | | | | | |
| Maleinsäurediethylester | **I** | | | | | | 5,6 |
| Versaticsäureglycidylester | | 24,6 | 17,2 | 25,1 | 20,2 | 14,1 | 13,4 |
| Acrylsäure | **II** | 9,9 | 8,2 | | 9,0 | | 7,1 |
| n-Butylacrylat | | | | | 15,2 | | |
| n-Butylmethacrylat | | 13,0 | | 10,4 | | | |
| 2-Ethylhexylacrylat | | | 20,8 | | | | |
| 4-Hydroxybutylacrylat | | | 23,9 | | | 19,7 | 18,8 |
| 2-Hydroxyethylacrylat | | 17,3 | | | | 9,8 | 9,3 |
| 2-Hydroxyethylmethacrylat | | | | 9,5 | | | |
| 2-Hydroxypropylacrylat | | | | | 9,6 | | |
| Isobornylacrylat | | | | 18,3 | 23,0 | | |
| Isobornylmethacrylat | | | | | | 30,4 | 29,1 |
| Methacrylsäure | | | | 14,5 | | 8,8 | |
| Methylmethacrylat | | 17,9 | | 22,2 | | 17,2 | 6,5 |
| Styrol | | 17,3 | 29,9 | | 23,0 | | 10,2 |
| Di-tert-butylperoxid | **III** | 1,5 | 1,5 | 1,5 | 1,5 | 1,5 | 1,5 |
| 1-Butanol | **IV** | 25,0 | | | 42,9 | | 25,0 |
| 3-Methoxy-1-butanol | | | 17,7 | | | 11,1 | |
| 1,2-Propylenglykol | | | | 33,3 | | | |
| N,N-Dimethylaminoethanol | **V** | | 2,4 | | 2,3 | | |
| 2-Amino-2-methyl-1-propanol | | 2,6 | | | | 2,4 | 2,4 |
| Triethanolamin | | | | 4,4 | | | |
| Wasser | **VI** | 122,4 | 143,1 | 100,4 | 87,4 | 108,7 | 99,9 |

Die Eigenschaften der in Beispiel 1 hergestellten Polyacrylatharze können der Tabelle 2 entnommen werden.

**Tabelle 2:**

| **Bezeichnung** | **1a** | **1b** | **1c** | **1d** | **1e** | **1f** | **1g** |
|---|---|---|---|---|---|---|---|
| Säurezahl (auf FK, ber.) | 16,3 | 21,2 | 32,9 | 20,7 | 23,0 | 22,0 | 40,8 |
| Hydroxylzahl (auf FK, ber.) | 144,4 | 135,4 | 102,9 | 91,0 | 153,6 | 146,5 | 122,4 |
| Verdünnung (%, ber.) | 80,0 | 85,0 | 75,0 | 70,0 | 90,0 | 80,0 | 85,0 |
| Neutralisationsgrad (%) | 100,0 | 70,0 | 50,0 | 70,0 | 65,0 | 70,0 | 65,0 |
| Festkörper (%, ber.) | 40,0 | 38,0 | 42,0 | 43,0 | 45,0 | 44,0 | 40,0 |
| Viskosität (23°C, mPa•s) | 1930 | 780 | 3160 | 2890 | 2140 | 2610 | 3200 |
| Mw (g/mol) | 42500 | 38800 | 15200 | 28700 | 22300 | 25600 | 37800 |

Mit der Dispersion 1f wurden die in den folgenden Beispielen 2 bis 17 beschriebenen Lacke hergestellt. Die an diesen Lacken gemessenen Eigenschaften sind in den jeweiligen Beispielen angegeben. Vergleichbare Eigenschaften wurden an solchen Lacken gemessen, die als Bindemittel eine Dispersion nach den Beispielen 1a bis le, sowie 1g enthalten.

### Beispiel 2:

### Wäßriger 1 K-Einbrenn-Unidecklack auf Basis eines Harzes aus Beispiel 1

Circa 60 Teile der Dispersion werden vorgelegt, mit 0,9 Teilen Additol® XL 250 (Netzmittel, 0,5 % auf Gesamtlack), 0,4 TL Additol® VXW 4973 (Entschäumer, 0,2 % auf Gesamtlack), 40,2 TL Titandioxid CL 2310® (Pigment, Bindemittel-Pigment-Verhältnis: 100:70) und 6 TL deionisiertem Wasser vermischt und 20 Minuten bei 6000 U/min unter Kühlung in einer Perlmühle (2-mmPerlen) abgerieben und mit einer Vormischung aus 11,5 TL Maprenal® MF 904 (Vernetzer, 100 %), 0,3 TL Additol® XW 390 (Verlaufsmittel, 0,5 % auf Gesamtlack), 0,67 TL Nacure® 2500 (Katalysator, 25 % in Wasser, 2 % bezogen auf Melaminharz) und 9,1 TL entionisiertes Wasser unter leichtem Rühren versehen. Der entlüftete Lack wird mit 150 µm Naßfilmstärke auf Gradientenbleche aufgezogen und 20 Minuten bei 100 bis 160 °C eingebrannt.

| | 100°C | 110°C | 120°C | 130°C | 140°C | 150°C | 160°C |
|---|---|---|---|---|---|---|---|
| Pendelhärte [s] | 60 | 75 | 139 | 178 | 182 | 188 | 189 |
| Acetonbeständigkeit n. 30 s/max. Beständigkeit [min] | 5 | 5 | 5 | 3 | 0/>3 | 0/>15 | 0/>30 |
| Xylolbeständigkeit [min] | <1 | <1 | <3 | >30 | >30 | >30 | > 30 |
| Schwefelsäurebeständigkeit 1 h RT, 37 %^{1*} | 1 | 1 | 0-1 | 0 | 0 | 0 | 0 |
| Glanz 20° [%] | 78 | 84 | 85 | 84 | 84 | 84 | 84 |

| | | | | | | | |
|---|---|---|---|---|---|---|---|
| ^{1*} Visuelle Beurteilung, 0 = bester Wert, 5 = schlechtester Wert | | | | | | | |

### Beispiel 3:

Beispiel 2 wird wiederholt, wobei nun 13,5 TL Maprenal® VMF 3921 w (Vernetzer, 85 % in Wasser) ohne Katalysator und insgesamt 13,8 TL entionisiertes Wasser eingesetzt werden.

| | 100°C | 110°C | 120°C | 130°C | 140°C | 150°C | 160°C |
|---|---|---|---|---|---|---|---|
| Pendelhärte [s] | 179 | 197 | 199 | 196 | 196 | 194 | 196 |
| Acetonbeständigkeit n. 30 s/max. Beständigkeit [min] | 5 | 0/>1 | 0/>5 | 0/>30 | 0/>60 | 0/>60 | 0/>60 |
| Xylolbeständigkeit [min] | >30 | >30 | >30 | >30 | >30 | >30 | > 30 |
| Schwefelsäurebeständigkeit 1 h RT, 37 % | 1 | 0 | 0 | 0 | 0 | 0 | 0 |
| Glanz 20° [%] | 87 | 84 | 83 | 80 | 80 | 76 | 77 |

### Beispiel 4:

Beispiel 2 wird mit folgenden Änderungen wiederholt: Statt Maprenal® MF 904 werden 15,3 TL Maprenal® VMF 3926 (Vernetzer, 75 % Isobutanol) ohne Katalysator und insgesamt 12 TL entionisiertes Wasser verwendet.

| | 100°C | 110°C | 120°C | 130°C | 140°C | 150°C | 160°C |
|---|---|---|---|---|---|---|---|
| Pendelhärte [s] | 183 | 196 | 198 | 196 | 196 | 194 | 193 |
| Acetonbeständigkeit n. 30 s/max. Beständigkeit [min] | 5 | 0/>2 | 0/>5 | 0/>20 | 0/>25 | 0/>25 | 0/>25 |
| Xylolbeständigkeit [min] | >20 | >20 | >20 | >20 | >20 | >20 | >20 |
| Schwefelsäurebeständigkeit 1 h RT, 37 % | 1 | 0 | 0 | 0 | 0 | 0 | 0 |
| Glanz 20° [%] | 83 | 82 | 82 | 80 | 80 | 78 | 77 |

### Beispiel 5:

Beispiel 2 wird mit folgenden Änderungen wiederholt: Statt Maprenal® MF 904 werden 15,3 TL Maprenal® MF 920 (Vernetzer, 75 % Wasser) und insgesamt 12 TL entionisiertes Wasser verwendet.

| | 100°C | 110°C | 120°C | 130°C | 140°C | 150°C | 160°C |
|---|---|---|---|---|---|---|---|
| Pendelhärte [s] | 177 | 191 | 191 | 190 | 184 | 183 | 190 |
| Acetonbeständigkeit n. 30 s/max. Beständigkeit [min] | 5 | 0/>4 | 0/>30 | 0/>30 | 0/>60 | 0/>60 | 0/>60 |
| Xylolbeständigkeit [min] | >30 | >30 | >30 | >30 | >30 | >30 | >30 |
| Schwefelsäurebeständigkeit 1 h RT, 37 % | 1 | 0 | 0 | 0 | 0 | 0 | 0 |
| Glanz 20° [%] | 86 | 84 | 80 | 77 | 70 | 69 | 69 |

### Beispiel 6:

Beispiel 2 wird mit folgenden Änderungen wiederholt: Statt Maprenal® MF 904 werden 15,3 TL Maprenal® MF 915 (Vernetzer, 75 % in Isobutanol) ohne Katalysator und insgesamt 13,4 TL entionisiertes Wasser verwendet.

| | 100°C | 110°C | 120°C | 130°C | 140°C | 150°C | 160°C |
|---|---|---|---|---|---|---|---|
| Pendelhärte [s] | 127 | 171 | 179 | 181 | 182 | 185 | 182 |
| Acetonbeständigkeit n. 30 s/max. Beständigkeit [min] | 5 | 5 | 5 | 4 | 4 | 0/<1 | 0/<1 |
| Xylolbeständigkeit [min] | 0,5 | 0,5 | <2 | <5 | <5 | <25 | <30 |
| Schwefelsäurebeständigkeit 1 h RT, 37 % | 0 | 0 | 0 | 0 | 0 | 0 | 0 |
| Glanz 20° [%] | 82 | 81 | 79 | 78 | 76 | 73 | 70 |

### Beispiel 7:

### Konventioneller 1 K-Einbrenn-Unidecklack auf Basis Alftalat® AC 451 n/AR 280/Maprenal® MF 915

33,91 TL eines Isononansäurealkyds (Alftalat® AC 451 n, 70 % Solvesso 100/Solvesso 150), 6,61 TL eines Ricinenalkyds (Alftalat® AR 280, 60 % Xylol), 27, 71 TL Titandioxid Kronos CL 2310, 0,3 TL Aerosil® 380 (Thixotropiermittel, Antiabsetzmittel) und 10 TL Xylol werden vorgelegt und auf der Perlmühle 30 Minuten bei 6000 U/min und 50 °C bis zu einem Grindometerwert unter 8 µm gemahlen, anschließend mit 15,83 TL eines teilveretherten Melamin-Formaldehyd-Harzes (Maprenal® MF 915, 75 % Isobutanol, Vernetzer), 0,69 TL Isononylalkohol, 2,77 TL Solvesso 100, 1,59 TL Xylol und 0,1 TL Additol® XL 480 (Verlaufsmittel) versetzt.

| | 100°C | 110°C | 120°C | 130°C | 140°C | 150°C | 160°C |
|---|---|---|---|---|---|---|---|
| Pendelhärte [s] | 52 | 103 | 129 | 138 | 143 | 152 | 155 |
| Acetonbeständigkeit n. 30 s/max. Beständigkeit [min] | 5 | 5 | 5 | 5 | 5 | 4 | 3 |
| Xylolbeständigkeit [min] | <1 | <1 | <1 | <2 | <4 | <25 | <25 |
| Schwefelsäurebeständigkeit 1 h RT, 37 % | 2 | 2 | 0 | 0 | 0 | 0 | 0 |
| Glanz 20° [%] | 85 | 85 | 85 | 82 | 81 | 79 | 79 |

### Beispiel 8:

### Wäßriger 1 K-Einbrenn-Klarlack auf Basis eines Harzes aus Beispiel 11

1,86 TL eines wassergelösten teilveretherten Melamin-Formaldehyd-Harzes (Maprenal® VMF 3921 w, 85 % Wasser, Vernetzer) werden vorgelegt und 0,35 TL Additol® XW 392 in Lieferform (Verlaufsmittel) zugegeben. Zu dieser Mischung werden 96,4 TL der Dispersion 1f addiert (Bindemittel-Melaminharz-Verhältnis, fest auf fest, 80:20). Anschließend werden 10 TL eines Butyldiglykol/Wasser-Gemisches (1:1) und ca. 14 TL entionisiertes Wasser zur Einstellung der Spritzviskosität von 18 - 20 s Auslaufzeit, 4-DIN-Becher, 23 °C, verwendet. Der pH-Wert wird, falls nötig, mit Dimethylethanolamin auf pH = 8 eingestellt. Der entlüftete Lack wird mit 150 µm Naßfilmstärke auf Gradientenbleche aufgezogen und 20 Minuten bei 100 bis 160 °C eingebrannt.

| | 100°C | 110°C | 120°C | 130°C | 140°C | 150°C | 160°C |
|---|---|---|---|---|---|---|---|
| Pendelhärte [s] | 169 | 209 | 211 | 208 | 207 | 210 | 208 |
| Acetonbeständigkeit n. 30 s/max. Beständigkeit [min] | 0,3 | 1,3 | 16 | 23 | 23 | 23 | 23 |
| Xylolbeständigkeit [min] | 0,13 | 5 | >6<21 | >6<21 | >6<21 | >6<21 | >6<21 |
| Schwefelsäurebeständigkeit 1 h RT, 37 % | 0 | 0 | 0 | 0 | 0 | 0 | 0 |

### Beispiel 9:

Beispiel 8 wird mit folgenden Änderungen wiederholt: Statt 11,8 TL Maprenal® VMF 3921 w werden 13,3 TL eines in Isobutanol gelösten teilmethylierten Melamin-Formaldehyd-Harzes (Maprenal® VMF 3926, 75 % Isobutanol, Vernetzer) und statt 11 TL 28 TL entionisiertes Wasser verwendet.

| | 100°C | 110°C | 120°C | 130°C | 140°C | 150°C | 160°C |
|---|---|---|---|---|---|---|---|
| Pendelhärte [s] | 173 | 209 | 211 | 211 | 210 | 209 | 206 |
| Acetonbeständigkeit n. 30 s/max. Beständigkeit [min] | 0,02 | 0,04 | 7,75 | 12 | 13 | 13,25 | 13,25 |
| Xylolbeständigkeit [min] | 0,05 | 5 | >6<21 | >6<21 | >6<21 | >6<21 | >6<21 |
| Schwefelsäurebeständigkeit 1 h RT, 37 % | 0 | 0 | 0 | 0 | 0 | 0 | 0 |

### Beispiel 10:

Beispiel 8 wird mit folgenden Änderungen wiederholt: Statt 11,8 TL Maprenal® VMF 3921 w werden 10 TL eines vollveretherten Melamin-Formaldehyd-Harzes (Maprenal® MF 900, 100 %, Vernetzer) und statt 14,4.TL entionisiertes Wasser 19 TL verwendet.

| | 100°C | 110°C | 120°C | 130°C | 140°C | 150°C | 160°C |
|---|---|---|---|---|---|---|---|
| Pendelhärte [s] | 69 | 131 | 170 | 186 | 203 | 216 | 222 |
| Acetonbeständigkeit n. 30 s/max. Beständigkeit [min] | <0,5 | <0,5 | <0,5 | <0,75 | <0,75 | <0,75 | <0,75 |
| Xylolbeständigkeit [min] | <0,008 | <0,008 | <0,008 | <0,008 | <0,008 | <0,05 | <0,05 |
| Schwefelsäurebeständigkeit 1 h RT, 37 % | 2 | 2 | 1 | 1 | 1 | 0 | 0 |

### Beispiel 11:

Beispiel 10 wird wiederholt, indem 0,19 TL eines Katalysators (Nacure® 2500, Lieferform, 2 % bezogen auf Melaminharzmenge) und 18 TL entionisiertes Wasser statt 19 TL verwendet werden.

| | 100°C | 110°C | 120°C | 130°C | 140°C | 150°C | 160°C |
|---|---|---|---|---|---|---|---|
| Pendelhärte [s] | 73 | 133 | 177 | 201 | 212 | 208 | 207 |
| Acetonbeständigkeit n. 30 s/max. Beständigkeit [min] | <0,5 | <0,5 | <0,5 | <0,5 | 3,5 | 13 | 17 |
| Xylolbeständigkeit [min] | 0,02 | 0,02 | 0,06 | 0,3 | 5 | 6 | 6 |
| Schwefelsäurebeständigkeit 1 h RT, 37 % | 2 | 2 | 1 | 0 | 0 | 0 | 0 |

### Beispiel 12:

Beispiel 8 wird mit folgenden Änderungen durchgeführt: Als Vernetzer werden 13,3 TL eines teilmethylierten, mittelreaktiven Melamin-Formaldehyd-Harzes (Maprenal® MF 915, 75 % Isobutanol, Vernetzer) und 25 TL entionisiertes Wasser eingesetzt.

| | 100°C | 110°C | 120°C | 130°C | 140°C | 150°C | 160°C |
|---|---|---|---|---|---|---|---|
| Pendelhärte [s] | 148 | 202 | 212 | 211 | 210 | 211 | 208 |
| Acetonbeständigkeit n. 30 s/max. Beständigkeit [min] | <0,5 | <0,5 | <0,5 | <0,5 | 2 | 5 | 6,25 |
| Xylolbeständigkeit [min] | 0,05 | 0,2 | 2 | 2 | 2,75 | >6<21 | >6<21 |
| Schwefelsäurebeständigkeit 1 h RT, 37 % | 1 | 1 | 1 | 1 | 0 | 0 | 0 |

### Beispiel 13:

Beispiel 12 wird wiederholt, indem 0,19 TL eines Katalysators (Nacure® 2500, Lieferform, 2 % auf Gesamtmelaminharzmenge) und 28 TL entionisiertes Wasser eingesetzt werden.

| | 100°C | 110°C | 120°C | 130°C | 140°C | 150°C | 160°C |
|---|---|---|---|---|---|---|---|
| Pendelhärte [s] | 153 | 200 | 209 | 208 | 209 | 205 | 204 |
| Acetonbeständigkeit n. 30 s/max. Beständigkeit [min] | <0,5 | <0,5 | <0,5 | <0,75 | 4,5 | 9,25 | 10 |
| Xylolbeständigkeit [min] | 0,05 | 0,06 | 2 | 2,83 | >6<21 | >6<21 | >6<21 |
| Schwefelsäurebeständigkeit 1 h RT, 37 % | 1 | 1 | 0 | 0 | 0 | 0 | 0 |

### Beispiel 14:

Beispiel 8 wird mit einer variierten Melaminharzmenge, nämlich mit 20,1 TL des wassergelösten, teilveretherten Melamin-Formaldehyd-Harzes (Maprenal® VMF 3921 w, 35 % Wasser, Vernetzer) durchgeführt (Bindemittel: Melaminharz-Verhältnis: 70:30).

| Pendelhärte auf Gradientenblech 20 min/100 - 160 °C | | | | | | | |
|---|---|---|---|---|---|---|---|
| VMF 3921 w | 100°C | 110°C | 120°C | 130°C | 140°C | 150°C | 160°C |
| 70 : 30 | 167s | 201s | 205s | 201s | 203s | 198s | 200s |

| Acetonbeständigkeit auf Gradientenblech 20 min/100 - 160 °C | | | | | | | |
|---|---|---|---|---|---|---|---|
| VMF 3921 w | 100°C | 110°C | 120°C | 130°C | 140°C | 150°C | 160°C |
| 70 : 30 | <30'' | 3' | 33' | >40' | >40' | >40' | >40' |

| Schwefelsäurebeständigkeit | | | | | | | |
|---|---|---|---|---|---|---|---|
| 1 h RT, 37 % | 0 | 0 | 0 | 0 | 0 | 0 | 0 |

### Beispiel 15:

Beispiel 8 wird mit 31,4 TL Maprenal® VMF 3921 w durchgeführt (Bindemittel-Melaminharz-Verhältnis: 60:40).

| Pendelhärte auf Gradientenblech 20 min/100 - 160 °C | | | | | | | |
|---|---|---|---|---|---|---|---|
| VMF 3921 w | 100°C | 110°C | 120°C | 130°C | 140°C | 150°C | 160°C |
| 60 : 40 | 132s | 191s | 197s | 201s | 204s | 204s | 201s |

| Acetonbeständigkeit auf Gradientenblech 20 min/100 - 160 °C | | | | | | | |
|---|---|---|---|---|---|---|---|
| VMF 3921 w | 100°C | 110°C | 120°C | 130°C | 140°C | 150°C | 160°C |
| 60 : 40 | <20'' | 4'30'' | >40' | >40' | >40' | >40' | >40' |

| Schwefelsäurebeständigkeit | | | | | | | |
|---|---|---|---|---|---|---|---|
| 1 h RT, 37 % | 1 | 0 | 0 | 0 | 0 | 0 | 0 |

### Beispiel 16:

Beispiel 8 wird mit 5,2 TL Maprenal® VMF 3921 w wiederholt (Bindemittel-Melaminharz-Verhältnis: 90:10).

| Pendelhärte auf Gradientenblech 20 min/100 - 160 °C | | | | | | | |
|---|---|---|---|---|---|---|---|
| VMF 3921 w | 100°C | 110°C | 120°C | 130°C | 140°C | 150°C | 160°C |
| 90 : 10 | 150s | 195s | 203s | 203s | 205s | 204s | 205s |

| Acetonbeständigkeit auf Gradientenblech 20 min/100 - 160 °C | | | | | | | |
|---|---|---|---|---|---|---|---|
| VMF 3921 w | 100°C | 110°C | 120°C | 130°C | 140°C | 150°C | 160°C |
| 90 : 10 | <30'' | <30'' | 30'' | 30'' | 30'' | 45'' | 45'' |

| Schwefelsäurebeständigkeit | | | | | | | |
|---|---|---|---|---|---|---|---|
| 1 h RT, 37 % | 0 | 0 | 0 | 0 | 0 | 0 | 0 |

### Beispiel 17:

### Klarlack auf Basis konventioneller Einbrenn-Acrylharze und eines n-butylierten Melaminharzes

46,67 TL eines Standard Einbrenn-Acrylharzes Synthacryl® SC 370, 75 % Solvesso 100, 53,85 TL eines Einbrenn-Acrylharzes Synthacryl SC 303, 65 % Xylol/ Butanol, 44,78 TL eines n-butylierten Melaminharzes (Maprenal® VMF 3610, Vernetzer, 67 % Butanol/Xylol), 1 TL eines Hals-Produktes (Tinuvin® 292, Radikalfänger), 1 TL eines UV-Absorbers (Tinuvin® 1130, UV-Absorber), 10 TL Isobutanol, 6 TL Solvesso 150, 18 TL Kristallöl K 30, 44 TL Solvesso 100 und 0,23 TL Additol® XL 121 (Slipadditiv) werden gemischt, wobei der daraus entstehende Klarlack eine Auslaufzeit von 25 Sekunden und einen Verarbeitungsfestkörper von ca. 43 % aufweist.

| | 100°C | 110°C | 120°C | 130°C | 140°C | 150°C | 160°C |
|---|---|---|---|---|---|---|---|
| Pendelhärte [s] | 45 | 68 | 122 | 152 | 160 | 163 | 162 |
| Acetonbeständigkeit n. 30 s/ max. Beständigkeit [min] | <0,5 | <0,5 | <0,5 | <0,5 | <0,5 | <1 | >1<2 |
| Xylolbeständigkeit [min] | <1 | <1 | <1 | <3 | >5<10 | >20<25 | >20<25 |
| Schwefelsäurebeständigkeit 1 h RT, 37 % | 2 | 2 | 1 | 1 | 1 | 0 | 0 |

## Patentansprüche

1. Wäßrige Dispersionen von Acrylatcopolymerisaten mit einer Hydroxylzahl von 80 bis 160 mg KOH/g und einer Säurezahl von 15 bis 50 mg KOH/g, erhalten durch radikalische Copolymerisation von
a) 10 bis 30 Gew.-Teilen mindestens eines Glycidylesters einer in α-Stellung verzweigten aliphatischen gesättigten Monocarbonsäure,
b) 0 bis 30 Gew.-Teilen mindestens eines Diesters einer α-olefinisch ungesättigten Dicarbonsäure mit 1 bis 8 C-Atomen in der Estergruppe,
c) 0 bis 45 Gew.-Teilen mindestens eines vinylaromatischen Kohlenwasserstoffs, wobei die molare Menge der Komponente c) immer größer oder gleich der molaren Menge der Komponente b) ist,
d) 10 bis 60 Gew.-Teilen mindestens eines Alkylesters einer α-olefinisch ungesättigten Carbonsäure, vorzugsweise (Meth)acrylsäurealkyl- oder cycloalkylester, welche einen Alkyl- oder Cycloalkylrest mit 1 bis 18 C-Atomen aufweisen,
e) 2 bis 40 Gew.-Teilen mindestens einer α-olefinisch ungesättigten Carbonsäure, vorzugsweise (Meth)acrylsäure, wobei die molare Menge der Komponente e) stets größer ist als die molare Menge der Komponente a),
f) 5 bis 40 Gew.-Teilen mindestens eines Hydroxyalkylesters einer α-olefinisch ungesättigten Carbonsäure, vorzugsweise eines Esters der (Meth)acrylsäure mit mehrwertigen aliphatischen Alkoholen mit 2 bis 6 C-Atomen,
wobei die Copolymerisation in Substanz oder in Gegenwart eines wasserverdünnbaren Lösemittels durchgeführt wird, gegebenenfalls anschließend weiteres wasserverdünnbares Lösemittel zugefügt wird, und zuletzt die Neutralisation mit Basen derartig erfolgt, daß nach dem Verdünnen mit Wasser stabile Dispersionen mit einem pH-Wert zwischen 6 und 10 resultieren.

2. Wäßrige Dispersion nach Anspruch 1, dadurch gekennzeichnet, daß das Acrylatcopolymerisat durch radikalische Copolymerisation eines Glycidylesters stark verzweigter Monocarbonsäuren mit 9 bis 11 C-Atomen als Komponente a) erhalten wird.

3. Wäßrige Dispersion, nach Anspruch 1, dadurch gekennzeichnet, daß das Acrylatcopolymerisat durch radikalische Copolymerisation von Isobornyl(meth)acrylat als Komponente d) erhalten wird.

4. Wäßrige Dispersion nach Anspruch 1, dadurch gekennzeichnet, daß die Polymerisation in einem wasserverdünnbaren Lösemittel durchgeführt wird, dessen Masse 5 bis 35 %, bevorzugt 10 bis 25 % der Summe der Massen von Polymer und Lösemittel beträgt, und das ganz oder teilweise gemeinsam mit den Monomeren c) bis f) zugegeben wird.

5. Verwendung der wäßrigen Dispersionen nach Anspruch 1 als Bindemittel in wäßrigen Einbrenn-Klarlacken oder wäßrigen Einbrenn-Unilacken.

6. Verwendung der wäßrigen Dispersionen nach Anspruch 1 als Bindemittel in wäßrigen Einbrenn-Klarlacken oder wäßrigen Einbrenn-Unilacken zusammen mit hochreaktiven, teilveretherten Melamin-Formaldehydharzen als Härter.

## Claims

1. An aqueous dispersion of an acrylate copolymer having a hydroxyl number of from 80 to 160 mg of KOH/g and an acid number of from 15 to 50 mg of KOH/g, obtained by free-radical copolymerization of
a) from 10 to 30 parts by weight of at least one glycidyl ester of an α-branched aliphatic saturated monocarboxylic acid,
b) from 0 to 30 parts by weight of at least one diester of an α-olefinically unsaturated dicarboxylic acid having 1 to 8 carbon atoms in the ester group,
c) from 0 to 45 parts by weight of at least one vinyl aromatic hydrocarbon, the molar quantity of component c) always being greater than or equal to the molar quantity of component b),
d) from 10 to 60 parts by weight of at least one alkyl ester of an α-olefinically unsaturated carboxylic acid, preferably an alkyl or cycloalkyl (meth)acrylate which contains an alkyl or cycloalkyl radical having 1 to 18 carbon atoms,
e) from 2 to 40 parts by weight of at least one α-olefinically unsaturated carboxylic acid, preferably (meth)acrylic acid, the molar quantity of component e) always being greater than the molar quantity of component a),
f) from 5 to 40 parts by weight of at least one hydroxyalkyl ester of an α-olefinically unsaturated carboxylic acid, preferably an ester of (meth)acrylic acid with a polyhydric aliphatic alcohol having from 2 to 6 carbon atoms,
the copolymerization being carried out in bulk or in the presence of a water-dilutable solvent, if desired further water-dilutable solvent being added subsequently, and finally the neutralization with bases being effected so as to give, after dilution with water, a stable dispersion having a pH of between 6 and 10.

2. An aqueous dispersion as claimed in claim 1, wherein the acrylate copolymer is obtained by free-radical copolymerization of a glycidyl ester of a heavily branched monocarboxylic acid having 9 to 11 carbon atoms as component a).

3. An aqueous dispersion as claimed in claim 1, wherein the acrylate copolymer is obtained by free-radical copolymerization of isobornyl (meth)acrylate as component d).

4. An aqueous dispersion as claimed in claim 1, which comprises carrying out the polymerization in a water-dilutable solvent whose mass is from 5 to 35%, preferably from 10 to 25% of the sum of the masses of polymer and solvent, and which is added in whole or in part together with monomers c) to f).

5. A method of using an aqueous dispersion as claimed in claim 1 as a binder in aqueous clearcoat baking enamels or aqueous solid-color baking enamels.

6. A method of using an aqueous dispersion as claimed in claim 1 as a binder in aqueous clearcoat baking enamels or aqueous solid-color baking enamels together with highly reactive, partially etherified melamine-formaldehyde resins as curing agents.

## Revendications

1. Dispersions aqueuses de copolymères acryliques ayant un indice d'hydroxyle de 80 à 160 mg de KOH/g et un indice d'acide de 15 à 50 mg de KOH/g, obtenues par copolymérisation radicalaire
a) de 10 à 30 parties en poids d'au moins un ester glycidylique d'un acide monocarboxylique saturé aliphatique, ramifié en position α,
b) de 0 à 30 parties en poids d'au moins un diester d'un acide dicarboxylique à insaturation α-oléfinique avec 1 à 8 atomes de carbone dans le groupe ester,
c) de 0 à 45 parties en poids d'au moins un hydrocarbure vinylaromatique, la quantité molaire du composant c) étant toujours supérieure ou égale à la quantité molaire du composant b),
d) de 10 à 60 parties en poids, d'au moins un ester d'alkyle d'un acide carboxylique à insaturation α-oléfinique, de préférence d'un ester d'alkyle ou de cycloalkyle d'acide (méth)acrylique, lesquels présentent un reste alkyle ou cycloalkyle avec 1 à 18 atomes de carbone,
e) de 2 à 40 parties en poids d'au moins un acide carboxylique à insaturation α-oléfinique, de préférence l'acide (méth)acrylique, la quantité molaire du composant e) étant toujours supérieure à la quantité molaire du composant a),
f) de 5 à 40 parties en poids d'au moins un ester d'hydroxyalkyle d'un acide carboxylique à insaturation α-oléfinique, de préférence d'un ester de l'acide (méth)acrylique avec des alcools aliphatiques multifonctionnels avec 2 à 6 atomes de carbone,
la copolymérisation pouvant être mise en oeuvre en masse ou en présence d'un solvant diluable à l'eau, et à la fin on neutralise avec des bases de façon telle que l'on obtienne des dispersions stables avec un pH compris entre 6 et 10 après dilution avec de l'eau.

2. Dispersions aqueuses selon la revendication 1, caractérisées en ce que l'on obtient le copolymère d'acrylate par copolymérisation radicalaire d'un ester glycidylique d'acides monocarboxyliques hautement ramifiés avec 9 à 11 atomes de carbone, en tant que composant a).

3. Dispersions aqueuses selon la revendication 1, caractérisées en ce que l'on obtient le copolymère d'acrylate par copolymérisation radicalaire du (méth)acrylate d'isobornyle en tant que composant d).

4. Dispersions aqueuses selon la revendication 1, caractérisées en ce que l'on met en oeuvre la polymérisation dans un solvant diluable à l'eau, dont la masse est de 5 à 35 %, de préférence de 10 à 25 % de la somme des masses du polymère et du solvant, et dont on ajoute une partie ou la totalité conjointement avec les monomères c) à f).

5. Utilisation de la dispersion aqueuse selon la revendication 1 en tant que liant dans des vernis clairs à cuire aqueux ou dans des vernis de finition unicolores à cuire aqueux.

6. Utilisation de la dispersion aqueuse selon la revendication 1 en tant que liant dans des vernis clairs à cuire aqueux ou dans des vernis de finition unicolores à cuire aqueux conjointement avec les résines de mélamine-formaldéhyde partiellement éthérifiées, hautement réactives en tant que durcisseurs.
